# EUROPÄISCHE PATENTANMELDUNG

(11) **EP 0 717 570 A2**
(43) Veröffentlichungstag der Anmeldung: **19.06.1996**
(21) Anmeldenummer: 95118895.2
(22) Anmeldetag: 30.11.1995
(51) Int. Cl.: H04Q 3/00, H04M 3/42

(54) **Verfahren zur Nutzung von nicht-anrufbezogenen Diensten durch Netzteilnehmer eines Kommunikationsnetzes**

(30) Priorität: 12.12.1994 DE 4444145
(71) Anmelder: SIEMENS AKTIENGESELLSCHAFT, D-80333 München (DE)
(72) Erfinder: Eder, Jürgen, Dipl.-Ing., D-81249 München (DE); Becker, Helmut, Dipl.-Ing., D-83043 Bad Aibling (DE)

(57) **Zusammenfassung**

In einem die Netzstruktur eines intelligenten Netzes unterstützenden Kommunikationsnetz wird eine Signalisierungsverbindung (SCI) für die Übertragung eines den nicht-anrufbezogenen Dienst kennzeichnenden Dienstecodes (SSC) zu einer Vermittlungseinrichtung (SW) des Kommunikationsnetzes aufgebaut, von der Vermittlungseinrichtung (SW) der über diese Signalisierungsverbindung (SCI) übertragene Dienstecode (SSC) ausgewertet und eine weitere Signalisierungsverbindung (SCO) zu einer Teilnehmerdatenbasis (INDB) des intelligenten Netzes hergestellt. Diese Teilnehmerdatenbasis (INDB) bearbeitet anhand einer zur Nutzung des speziellen nicht-anrufbezogenen Dienstes übertragenen Signalisierungsinformation den durch den Dienstecode festgelegten Dienst. Auf diese Weise lassen sich neue Dienste bzw. Dienstekategorien bei Kombination eines Kommunikationsnetzes mit einem intelligenten Netz ohne Belegung von Sprachkanälen und damit unabhängig vom Aussenden oder Empfangen von Anrufen durch die Netzteilnehmer des Kommunikationsnetzes nutzen und bestehende Signalisierungssysteme oder Signalisierungsprotokolle besser auslasten.

## Beschreibung

Die Erfindung betrifft ein Verfahren zur Nutzung von nichtanrufbezogenen Diensten durch Netzteilnehmer eines die Struktur eines intelligenten Netzes unterstützenden Kommunikationsnetzes.

Bekanntlich können die Netzteilnehmer von Kommunikationsnetzen - ob Festnetz wie beispielsweise ein diensteintegrierendes digitales Netz (ISDN) oder ein Mobilfunknetz wie beispielsweise das für Europa standardisierte GSM-Netz (Global System for Mobile Communication) - jeweils eine Vielzahl von Diensten nutzen, die von den jeweiligen Netzbetreibern angeboten werden. Im Mobilfunknetz nach dem GSM-Standard kann beispielsweise zwischen Datendiensten (bearer services), grundlegenden Telekommunikationsdiensten (teleservices) und Zusatzdiensten (supplementary services), die zu den Telekommunikationsdiensten hinzukommen, unterschieden werden. Bei den im Kommunikationsnetz zur Verfügung stehenden Diensten handelt es sich um anrufbezogene Dienste, d.h. für die Nutzung eines Dienstes muß jeweils ein Nutzkanal in Form eines Sprachübertragungskanals belegt werden.

Darüber hinaus existieren intelligente Netze, in denen ebenfalls Dienste für die Netzteilnehmer eingerichtet und von ihnen nutzbar sind. Diese Dienste können unabhängig und völlig verschieden von den Diensten in den Kommunikationsnetze sein. Für die Netzteilnehmer der Kommunikationsnetze, die die Netzstruktur eines derartigen intelligenten Netzes unterstützen - durch Verwirklichung von Dienstevermittlungseinheiten (Service Switching Points) in den jeweiligen Vermittlungseinrichtungen und von Dienstesteuerungseinheiten (Service Control Points) in den jeweiligen Teilnehmerdatenbasen des jeweiligen Kommunikationsnetzes - besteht somit der Wunsch zur Nutzung von zusätzlichen Diensten des intelligenten Netzes in einem erweiterten Dienstespektrum.

Aufgabe der vorliegenden Erfindung ist es, ein Verfahren zur Nutzung von nicht-anrufbezogenen Diensten durch die Netzteilnehmer eines die Netzstruktur eines intelligenten Netzes unterstützenden Kommunikationsnetzes zu schaffen.

Diese Aufgabe wird durch die Merkmale des Patentanspruchs 1 gelöst. Weiterbildungen der Erfindung sind in den Unteransprüchen angegeben.

Dadurch, daß für die Übertragung eines den nicht-anrufbezogenen Dienst kennzeichnenden Dienstecodes eine Signalisierungsverbindung zu einer Vermittlungseinrichtung des Kommunikationsnetzes aufgebaut wird, ist nicht die Belegung eines Sprachübertragungskanals erforderlich. Von der Vermittlungseinrichtung wird der über diese Signalisierungsverbindung übertragene Dienstecode ausgewertet und eine weitere Signalisierungsverbindung zu einer Teilnehmerdatenbasis des intelligenten Netzes hergestellt. Diese Teilnehmerdatenbasis bearbeitet anhand einer zur Nutzung des speziellen nicht-anrufbezogenen Dienstes übertragenen Signalisierungsinformation den durch den Dienstecode festgelegten Dienst. Auf diese Weise lassen sich neue Dienste bzw. Dienstekategorien bei Kombination eines Kommunikationsnetzes mit einem intelligenten Netz ohne Belegung von Sprachkanälen und damit unabhängig vom Aussenden oder Empfangen von Anrufen durch die Netzteilnehmer des Kommunikationsnetzes nutzen. Neben der Einführung neuer Dienste für die Netzteilnehmer des Kommunikationsnetzes über Signalisierungsverbindungen bietet das erfindungsgemäße Verfahren auch die Möglichkeit, bestehende Signalisierungssysteme und Signalisierungsprotokolle in dem jeweiligen Kommunikationsnetz auf Basis intelligenter Netze besser auszulasten.

Von Vorteil ist es, wenn von der Teilnehmerdatenbasis des intelligenten Netzes über die bestehenden Signalisierungsverbindungen eine oder mehrere Signalisierungsinformationen zu der Teilnehmerstation des Dienstenutzers rückübertragen werden, um die Bearbeitung des nicht-anrufbezogenen Dienstes dem Dienstenutzer anzuzeigen oder ihm dienstespezifische Informationen während oder nach der Behandlung des nicht-anrufbezogenen Dienstes durch die Teilnehmerdatenbasis zu übermitteln.

Auch ist es von Vorteil, wenn vor der Auswertung des über die Signalisierungsverbindung übertragenen Dienstecodes auf eine Teilnehmerdatenbasis des Kommunikationsnetzes von der Vermittlungseinrichtung zugegriffen wird, in der die Teilnehmerdaten des Dienstenutzers gespeichert werden. Auf diese Weise ist das Teilnehmerprofil des Dienstenutzers vor der Nutzung weitergehender Dienste des intelligenten Netzes abrufbar. Das Teilnehmerprofil umfaßt Informationen über die Zugangsberechtigung des Netzteilnehmers zum Netz, über Anzahl und Art von jeweils für den Netzteilnehmer eingetragenen Diensten usw..

Ein Ausführungsbeispiel der Erfindung wird anhand einer Figur erläutert, die die zur Nutzung von nicht-anrufbezogenen Diensten erforderlichen Einrichtungen in einem die Netzstruktur eines intelligenten Netzes unterstützenden Kommunikationsnetz zeigt.

Die Einrichtungen des Kommunikationsnetzes bestehen aus einer Teilnehmerstation SST eines Netzteilnehmers SA, einer Vermittlungseinrichtung SW und einer Teilnehmerdatenbasis NDB. Für den Fall, daß das Kommunikationsnetz ein digitales Mobilfunknetz nach dem GSM-Standard darstellt, sind der Netzteilnehmer SA als Mobilfunkteilnehmer, die Teilnehmerstation SST als mobile Teilnehmerstation, die Vermittlungseinrichtung SW als Mobilvermittlungsstelle und die Teilnehmerdatenbasis NDB als Heimatregister oder als Besucherregister aufzufassen. Bei Vorliegen eines stationären Festnetzes - wie beispielsweise dem diensteintegrierenden Digitalnetz ISDN (Integrated Services Digital Network) - ist die Teilnehmerstation SST als ein leitungsgebundenes oder ein schnurloses Endgerät ausgeführt, während die Vermittlungseinrichtung SW und die Teilnehmerdatenbasis NDB in einem lokalen Vermittlungssystem (Local Exchange) mit zugehöriger Speichereinrichtung vereint sind.

Das Mobilfunknetz nach dem GSM-Standard und das diensteintegrierende Digitalnetz sind nur als Beispiele für Kommunikationsnetze angeführt, die die Struktur von intelligenten Netzen unterstützten. Ein intelligentes Netz ist durch Vorhandensein von Dienstesteuerungseinheiten und Dienstevermittlungseinheiten gekennzeichnet, die untereinander im Dialog Informationen austauschen. Zur Unterstützung der Netzstruktur eines intelligenten Netzes ist in der Vermittlunseinrichtung SW des Kommunikationsnetzes eine Dienstevermittlungseinheit SSP und in der Teilnehmerdatenbasis NDB des Kommunikationsnetzes eine Dienstesteuerungseinheit SCP verwirklicht. Durch Unterstützung der Netzstruktur eines intelligenten Netzes ist ein Informationsaustausch zwischen Einrichtungen des Kommunikationsnetzes, z.b. der Vermittlungseinrichtung SW, und Einrichtungen des intelligenten Netzes, z.B. einer Teilnehmerdatenbasis INDB, möglich. Die Teilnehmerdatenbasis INDB bildet dabei eine weitere Dienstesteuerungseinheit SCP'.

Zur Nutzung von nicht-anrufbezogenen Diensten, die keinen Nutzkanal in Form eines Sprachübertragungskanals benötigen, gibt der Netzteilnehmer SA als Dienstenutzer einen Dienstecode SSC zur Kennzeichnung eines von ihm gewünschten Dienstes in die Teilnehmerstation SST ein. Die Teilnehmerstation SST erkennt anhand des eingegebenen Dienstecodes SSC, daß es sich um eine nicht-anrufbezogene Signalisierung eines bestimmten Dienstes handelt. Daraufhin wird eine Signalisierungsverbindung SCI zu der Vermittlungseinrichtung SW für die Übertragung des Dienstecodes SSC aufgebaut. Die Vermittlungseinrichtung SW erkennt ihrerseits anhand des mitgeteilten Dienstecodes SSC, daß vom Netzteilnehmer SA ein Dienst des intelligenten Netzes genutzt werden möchte, und fordert daher von der Teilnehmerdatenbasis NDB die für den Netzteilnehmer SA gespeicherten Teilnehmerdaten über ein für den Dialog zwischen den Einrichtungen des Kommunikationsnetzes vorgesehenes Signalisierungsprotokoll an.

So wird zwischen dem Heimatregister bzw. dem Besucherregister und der Mobilvermittlungsstelle in dem Mobilfunknetz ein Signalisierungsprotokoll MAP (Mobile Application Part) verwendet. Die für den Netzteilnehmer SA gespeicherten Teilnehmerdaten spiegeln das Teilnehmerprofil wieder, das Informationen über die Zugangsberechtigung des Netzteilnehmers zum Kommunikationsnetz, Informationen über die für ihn reservierten und in Anspruch genommenen Dienste, Informationen über seinen momentanen Aufenthaltsort durch Angabe des für ihn gerade zuständigen Besucherregisters usw. enthält.

Nach dem Erhalt und der Überprüfung der angeforderten Daten über den Netzteilnehmer SA wird eine weitere Signalisierungsverbindung SCO von der Vermittlungseinrichtung SW zu der Teilnehmerdatenbasis INDB des intelligenten Netzes hergestellt und eine Signalisierungsinformation zur Nutzung des nicht-anrufbezogenen Dienstes, der durch den übermittelten Dienstecode SSC festgelegt ist, an die Teilnehmerdatenbasis abgegeben. Die Signalisierungsverbindung SCO umfaßt ein Signalisierungsprotokoll INAP (Intelligent Network Application Part), mit dem der Dialog und der Informationsaustausch zwischen einer Einrichtung des intelligenten Netzes und einer Einrichtung des Mobilfunknetzes möglich ist.

Anhand der durch die Signalisierungsverbindung SCO übertragenen Signalisierungsinformation führt die Teilnehmerdatenbasis INDB eine Bearbeitung des durch den Dienstecode SSC festgelegten nicht-anrufbezogenen Dienstes durch. Die Dienstebehandlung erfolgt ebenso wie bei jedem anderen Dienst, beispielsweise einem Telekommunikationsdienst. Beispiele für nicht-anrufbezogene Dienste, die von dem Netzteilnehmer SA durch den Aufbau von Signalisierungsverbindungen im Kommunikationsnetz ohne Belegung eines Nutzkanals genutzt werden können, sind die Abfrage von Kontostand bei einem Kreditinscitut, die Anfrage von bestimmten Verkehrsdurchsagen, die Bezahlung von Autobahngebühren oder anderen Gebühren usw..

Die Bearbeitung von nicht-anrufbezogenen Diensten INS1, INS2, INS3... durch die Teilnehmerdatenbasis INDB des intelligenten Netzes erlaubt zum einen die Einführung und Inanspruchnahme neuer Dienste für die Netzteilnehmer von bestehenden Kommunikationsnetzen und zum anderen eine effizientere Auslastung bestehender Signalisierungssysteme und Signalisierungsprotokolle in Kommunikationsnetzen auf der Basis intelligenter Netze. Über die aufgebauten Signalisierungsverbindungen können auch Signalisierungsinformationen von der Teilnehmerdatenbasis INDB des intelligenten Netzes zu der Teilnehmerstation SST des Dienstenutzers rückübertragen werden, um beispielsweise die Bearbeitung des jeweiligen nicht-anrufbezogenen Dienstes INS1... dem Netzteilnehmer SA anzuzeigen oder um dienstespezifische Informationen in der Rückrichtung zum Netzteilnehmer SA übertragen zu können. Als Dienstecode SSC zur Kennzeichnung der nicht-anrufbezogenen Dienste kann beispielsweise ein individueller Code wie der Zusatzdienstecode im Mobilfunknetz , der üblicherweise für Dienste in den nationalen Ländern reserviert ist, verwendet werden.

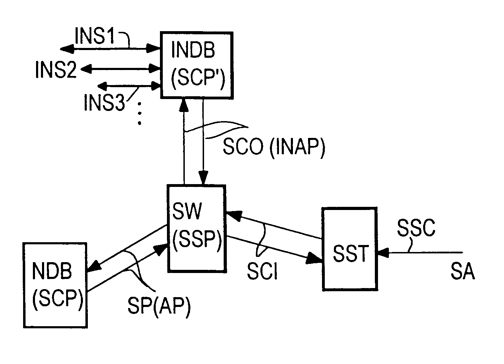

## Patentansprüche

1. Verfahren zur Nutzung von nicht-anrufbezogenen Diensten durch Netzteilnehmer (SA) eines die Netzstruktur eines intelligenten Netzes unterstützenden Kommunikationsnetzes, bei dem
- eine Signalisierungsverbindung (SCI) für die Übertragung eines Dienstecodes (SSC) zur Kennzeichnung eines nicht-anrufbezogenen Dienstes (z.B. INS1) zu einer Vermittlungseinrichtung (SW) des Kommunikationsneztes aufgebaut wird,
- der über die Signalisierungsverbindung (SCI) übertragene Dienstecode (SSC) von der Vermittlungseinrichtung (SW) ausgewertet, eine weitere Signalisierungsverbindung (SCO) zu einer Teilnehmerdatenbasis (INDB) des intelligenten Netzes hergestellt und darüber eine Signalisierungsinformation zur Nutzung des nicht-anrufbezogenen Dienstes übertragen wird und bei dem
- von der Teilnehmerdatenbasis (INDB) anhand der übertragenen Signalisierungsinformation der durch den Dienstecode (SSC) festgelegte nicht-anrufbezogene Dienst bearbeitet wird.

2. Verfahren nach Anspruch 1,
**dadurch gekennzeichnet,**
daß von der Teilnehmerdatenbasis (INDB) des intelligenten Netzes über die Signalisierungsverbindungen (SCO, SCI) eine Signalisierungsinformation zu einer Teilnehmerstation (SST) des Dienstenutzers (SA) rückübertragen wird, die die Bearbeitung des nicht-anrufbezogenen Dienstes anzeigt.

3. Verfahren nach Anspruch 2,
d**adurch gekennzeichnet,**
daß von der Teilnehmerdatenbasis (INDB) des intelligenten Netzes über die Signalisierungsverbindungen (SCO, SCI) weitere Signalisierungsinformationen zu der Teilnehmerstation (SST) des Dienstenutzers (SA) rückübertragen werden, die dienstespezifische Informationen während der Dienstebehandlung enthalten.

4. Verfahren nach einem der vorhergenden Ansprüche,
**dadurch gekennzeichnet,**
daß vor der Auswertung des Dienstecodes (SSC) von der Vermittlungseinrichtung (SW) auf eine Teilnehmerdatenbasis (NDB) des Kommunikationsnetzes zugegriffen wird, in der die Teilnehmerdaten des Dienstenutzers (SA) gespeichert werden.

5. Verfahren nach einem der Ansprüche 1 bis 4,
**dadurch gekennzeichnet,**
daß als Kommunikationsnetz ein diensteintegrierendes digitales Netz mit Vermittlungssystemen und Speichereinrichtungen verwendet wird.

6. Verfahren nach einem der Ansprüche 1 bis 4,
**dadurch gekennzeichnet,**
daß als Kommunikationsnetz ein digitales Mobilfunknetz mit Mobilvermittlungsstellen und Datenregistern verwendet wird.

7. Verfahren nach Anspruch 6,
**dadurch gekennzeichnet,**
daß ein individueller Zusatzdienstecode zur Kennzeichnung der nicht-anrufbezogenen Dienste verwendet wird.
